# EUROPÄISCHE PATENTSCHRIFT

(11) **EP 0 711 721 B1**
(45) Veröffentlichungstag und Bekanntmachung des Hinweises auf die Patenterteilung: **07.01.1998**
(21) Anmeldenummer: 95116211.4
(22) Anmeldetag: 14.10.1995
(51) Int. Cl.: B65G 69/28

(54) **Überfahrbrücke für Rampen**
Loading bridge for ramps
Pont de transbordement pour rampes

(30) Priorität: 12.11.1994 DE 4440484
(43) Veröffentlichungstag der Anmeldung: 15.05.1996
(73) Patentinhaber: Alten, Kurt, D-30974 Wennigsen (DE)
(72) Erfinder: Alten, Kurt, D-30967 Wennigsen (DE); Borchardt, Horst, D-30967 Wennigsen (DE)
(74) Vertreter: Depmeyer, Lothar

(56) Entgegenhaltungen:
- DE-A- 1 756 725
- DE-A- 3 407 165
- DE-U- 7 428 147
- DE-U- 8 912 968

## Beschreibung

Die Erfindung betrifft eine Überfahrbrücke für Rampen mit einer an ihrem rampenseitigen Ende um eine waagerechte Achse verschwenkbaren Brückenplatte, die am freien, vorderen Ende mit einer ein- und ausklappbaren Verlängerung zum Auflegen auf eine zu be- bzw. entladende Plattform versehen ist, wobei die Brückenplatte sich in der Ruhestellung über die nach unten geklappte Verlängerung auf einem Widerlager abstützt und zu beiden Seiten eines Mittelteils mit einem vom Mittelteil trennbaren, aber ebenfalls klappbaren Abschnitt versehen ist (siehe zum Beispiel die DE-A-3407165).

Diese Abschnitte eröffnen die Möglichkeit, die wirksame Auflagebreite der Brücke zu verändern, indem z.B. zur Verringerung der Auflagebreite lediglich das Mittelteil der Verlängerung in die Wirkstellung gebracht wird, während die Abschnitte in oder in der Nähe ihrer abgeklappten Ruhestellung verharren.

Darüber hinaus verlangen Brücken der eingangs erwähnten Art eine sich unterhalb der Verlängerung befindliche Traverse als Widerlager, das der Abstützung der Brückenplatte über die Verlängerung dient. Es versteht sich, das für eine solche Stütztraverse ein nicht unerheblicher technischer Aufwand erforderlich ist. Darüber hinaus ist eine solche Traverse in vielen Fällen auch hinderlich, und zwar nicht nur für Arbeiten unterhalb der Brückenplatte, sondern auch für bestimmte Hilfseinrichtungen an Fahrzeugen, die beim Andocken eines Fahrzeuges unter die Brückenplatte verbracht werden müssen.

Der Erfindung liegt im wesentlichen die Aufgabe zugrunde, die eingangs erwähnten Brücken so zu verbessern, dass die vorerwähnten Stütztraversen in Fortfall kommen können, zugleich aber der Vorteil erhalten bleibt, dass unterschiedlich grosse Auflagebreiten der Brücke gewählt werden können.

Zur Lösung dieser Aufgabe ist erfindungsgemäss vorgesehen, dass nunmehr die Abstützung der Brückenplatte in der Ruhelage der Brücke über die im Bereich der seitlichen Brückenränder befindlichen Abschnitte der Verlängerung erfolgt.

Demgemäss erfüllen die seitlich angeordneten Abschnitte zwei verschiedene Aufgaben. Einmal dienen sie durch Verharren in der etwa senkrechten Ruhestellung oder durch Ausklappen in die Wirkstellung der Veränderung der wirksamen Auflagebreite der Brücke, zum anderen übernehmen sie die Abstützung der Brückenplatte, wenn sich die Brücke in der Ruhestellung befindet und die Brückenplatte durch den allgemeinen Rampenverkehr einer erheblichen Belastung unterworfen ist.

Die für die seitlichen Abschnitte erforderlichen Widerlager können an den seitlichen Rändern der Rampenausnehmungen angeordnet sein z.B. in Form von kleinen, in die Rampenausnehmung hineinragenden Widerlagern, vorzugsweise werden jedoch an der Stirnseite der Rampe befindliche, nahe an den Rändern der Rampenausnehmung befindliche Widerlager benutzt, auf die sich kleine, ohrenartig abstehende Vorsprünge an den erwähnten Abschnitten abstützen können, wenn die Abschnitte sich in der Ruhestellung befinden bzw. wenn diese nach unten geklappt sind.

Die Klappbewegung des Mittelteils der Verlängerung einerseits und diejenige seiner seitlichen Abschnitte kann an sich durch beliebige Mittel erfolgen so z.B. durch hydraulische Klappzylinder für das Mittelteil und die Abschnitte, vorzugsweise wird jedoch lediglich dem Mittelteil ein Klappzylinder zugeordnet, wobei dann durch lösbare Kupplungen zwischen dem Mittelteil und den beiden seitlichen Abschnitten eine Mitnahme der Abschnitte vollzogen werden kann. Eine solche Einrichtung ist im Deutschen Patent 34 07 165 des Anmelders beschrieben.

Weitere Einzelheiten der Erfindung werden anhand der Zeichnung erläutert, in der ein Ausführungsbeispiel der Erfindung dargestellt ist. Es zeigen :
Fig. 1 eine Draufsicht auf eine in der Wirkstellung befindliche Überfahrbrücke für Rampen,
Fig. 2 einen Schnitt nach der Linie II - II von Fig. 1,
Fig. 3 eine Teildraufsicht auf die Brücke gemäss Fig. 1, jedoch in der Ruhestellung,
Fig. 4 ebenfalls eine Teildraufsicht auf die Brücke gemäss Fig. 1 in der Wirkstellung und
Fig. 5 eine Teilseitenansicht des Brückenabschnittes gemäss Fig. 3 in Richtung des Pfeiles V gesehen (unter Fortlassung eines Anschlagpuffers an der Rampenstirnseite).

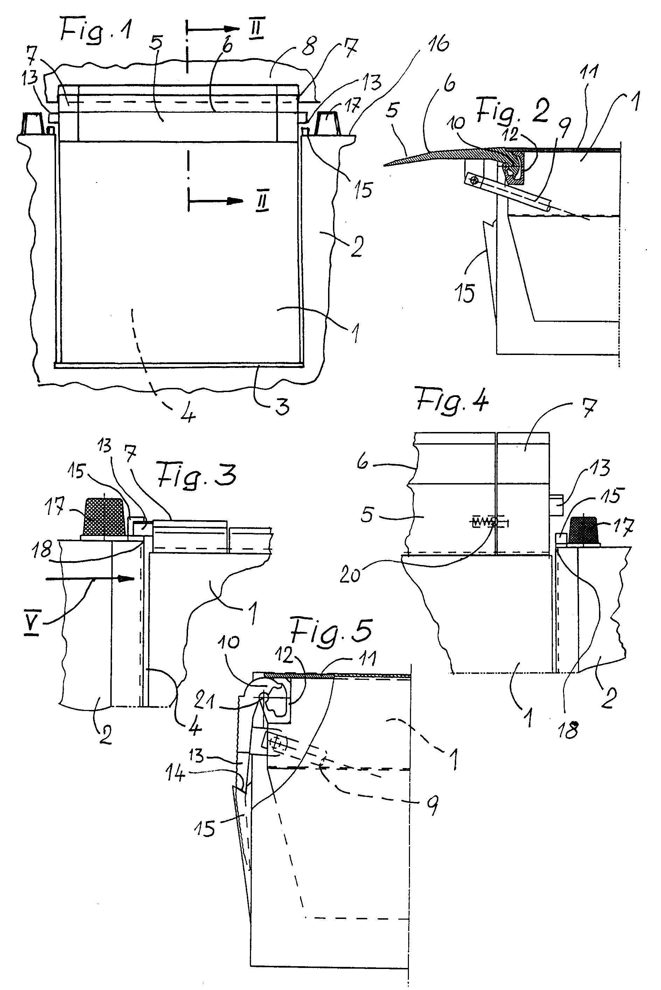

Die Brückenplatte 1 der Überfahrbrücke ist an ihrem hinteren, der Rampe 2 zugekehrten Ende um eine waagerechte Achse 3 verschwenkbar und in einer der Rechteckform der Brückenplatte 1 angepassten Ausnehmung 4 der Rampe 2 angeordnet. Am vorderen, freien Ende der Brückenplatte 1 ist diese mit einer in der Ruhestellung etwa senkrecht stehenden (Fig. 5) und in der Gebrauchslage etwa in der Brückenebene befindlichen und dazu ausgeklappten (Fig. 2) Verlängerung 5 versehen, die aus einem sich über dem grössten Teil der Brückenbreite erstreckenden Mittelteil 6 und zu beiden Seiten der Brücke befindlichen, am Brückenrand angeordneten, schmalen Abschnitten 7 besteht.

Wie aus Fig. 1 erkennbar ist, liegt die Verlängerung 5 vorne auf der zu be- bzw. entladenden Plattform 8 eines Fahrzeuges od. dgl. auf, um so einen Überfahrbetrieb zu ermöglichen. Die Brückenplatte 1 stützt sich dabei auf der Plattform 8 auf, und zwar über die ausgeklappte Verlängerung 5 und folgt damit auch evtl. Höhenänderungen der Plattform 8.

Die Verschwenkbewegung der Verlängerung 5 erfolgt mit Hilfe eines Arbeitszylinders 9. Im übrigen greift die Verlängerung 5 mit einem sich nach hinten erstreckenden Fortsatz 10 formschlüssig in ein unterhalb des Deckbleches 11 der Brückenplatte 1 befestigtes Profil 12 der Brückenplatte 1 in der Weise ein, dass die gewünschte Verschwenkung der Verlängerung 5 bzw. ihrer Teile 6, 7 möglich wird.

Die beiden seitlich aussen an der Brücke angeordneten Abschnitte haben etwa auf halber Länge ohrenartig seitlich nach aussen abstehende Vorsprünge 13 mit einer nach hinten schräg nach unten abfallenden Stützfläche 14. Diesem Vorsprung ist ein stationäres Widerlager 15 zugeordnet, das sich an der Stirnseite 16 der Rampe 2 zwischen einem Anschlagpuffer 17 und den die Ausnehmung 4 begrenzenden Kanten 18 befindet. Dieses Widerlager hat eine schräg nach hinten abfallende Auflagefläche für die Stützfläche 14, um ein Abrutschen der Abschnitte 7 nach vorne zu unterbinden, wenn sich die Brücke in Ruhestellung befindet. Die Abstützung der Brückenplatte 1 bei Nichtbetrieb der Brücke geschieht also ausschliesslich über die Abschnitte 7 und nicht mit Hilfe des Mittelteils 6, das somit unter sich freien Raum lässt und eine Traverse oder andere in die Ausnehmung 4 hineinragende Elemente nicht benötigt.

Die Gelenkausbildung der Abschnitte 7 ( Fortsatz 10 und Profil 12 ) ist für die Erfindung deshalb von Bedeutung, weil die Brückenabstützung über die Abschnitte 7 erfolgt und deshalb besonders grosse Beanspruchungen der Gelenkstellen der Abschnitte 7 eintreten. Diese Belastung ist jedoch tragbar, weil sowohl der Fortsatz 11 als auch das Profil 12 sich über die Breite der Abschnitte 7 erstrecken und sich dadurch im Vergleich zu scharnierartigen Anlenkungen grosse korrespondierende Druck- und Anschlagflächen ergeben.

Es sei noch erwähnt, dass zwischen dem Mittelteil 6 und den beiden Abschnitten eine lösbare Kupplung in Form einer federbelasteten, am Mittelteil 6 gelagerten Kugel 20 vorgesehen ist, die in eine kleine Ausnehmung an den Abschnitten 7 eingreift. Dem Deutschen Patent 34 07 165 entsprechend erfolgt dadurch eine Mitnahme der Abschnitte 7, wenn das Mittelteil 6 verschwenkt wird. Sind die beiden Abschnitte 7 in der Stützstellung, so verharren sie in dieser Stellung, wenn das Mittelteil 6 herausgeschwenkt wird, um so eine verringerte Auflagebreite zu erzielen. Wird hingegen von der Stützstellung gemäss Fig. 5 aus die Brückenplatte 1 zunächst angehoben ( zum Lösen des Formschlusses am Widerlager 15 ), so werden die beiden Abschnitte 7 mitgenommen, sollte das Mittelteil 6 nunmehr mittels Arbeitszylinder 9 hochgeschwenkt werden. Damit wird die grosse Auflagebreite - der Brückenbreite entsprechend - erreicht.

Wie insb. aus Fig. 5 erkennbar ist, ist der Fortsatz 10 praktisch nach Art eines Sektors eines Kreisringes gestaltet, der unten auf einem Wulst 21 des Profils 12 aufliegt. Dieser Wulst ist aussen zylindermantelförmig gestaltet und dem Innenradius des Fortsatzes 10 angepasst.

## Patentansprüche

1. Überfahrbrücke für Rampen mit einer an ihrem rampenseitigen Ende um eine waagerechte Achse verschwenkbaren Brückenplatte (1), die am freien, vorderen Ende (3) mit einer ein- und ausklappbaren Verlängerung (5) zum Auflegen auf eine zu be- bzw. entladende Plattform (8) versehen ist, wobei die Brückenplatte (1) sich in der Ruhestellung über die nach unten geklappte Verlängerung (5) auf einem Widerlager abstützt, die zu beiden Seiten eines Mittelteils (6) mit einem vom Mittelteil (6) trennbaren, aber ebenfalls klappbaren Abschnitt (7) versehen ist, dadurch gekennzeichnet, dass die Abstützung der Brückenplatte (1) in der Ruhelage der Brücke über die im Bereich der seitlichen Brückenränder befindlichen Abschnitte (7) der Verlängerung (5) erfolgt.

2. Brücke nach Anspruch 1, dadurch gekennzeichnet, dass die Abschnitte (7) seitlich aussen mit ohrenartig abstehenden Vorsprüngen (13) versehen sind und sich die zugehörigen Widerlager (15) an der Stirnseite (16) der Rampe (2) befinden.

3. Brücke nach Anspruch 1, dadurch gekennzeichnet, dass zur Anlenkung der Abschnitte (7) an der Brückenplatte (1) die Abschnitte mit einem bogenförmigen Fortsatz (10) versehen sind, der formschlüssig in ein an der Brückenplatte (1) gelagertes Profil eingreift, wobei sich der Fortsatz und das Profil über die Breite der Abschnitte (7) erstrecken und auch über diese Breite einander berühren.

4. Brücke nach Anspruch 3, dadurch gekennzeichnet, dass der Fortsatz (10) nach Art eines Sektors eines Kreisringes gestaltet ist, der innen auf einem dem inneren Radius des Kreisringes angepassten, die Schwenkachse bestimmenden Wulst (21) des Profils (12) aufliegt.

5. Brücke nach Anspruch 1, dadurch gekennzeichnet, dass die Abstützung ausschliesslich über die Abschnitte (7) erfolgt.

## Claims

1. Transfer bridge for platforms, having a bridge plate (1), which is pivotable at its platform end about a horizontal axis and is provided, at the free front end (3), with an inwardly and outwardly pivotable extension member (5) for support on a deck (8) to be loaded or unloaded, the bridge plate (1) being supported, in the inoperative position, on a support via the downwardly pivoted extension member (5), which is provided, on both sides of a central part (6), with a portion (7) which is separable from the central part (6) but is also pivotable, characterised in that, in the inoperative position of the bridge, the bridge plate (1) is supported via the portions (7) of the extension member (5) which are situated in the region of the lateral edges of the bridge.

2. Bridge according to claim 1, characterised in that the portions (7) are provided laterally externally with ear-like protruding projection members (13), and the associated supports (15) are situated on the end face (16) of the platform (2).

3. Bridge according to claim 1, characterised in that, for the pivotal connection of the portions (7) to the bridge plate (1), the portions are provided with an arcuate extension (10), which engages in a form-fitting manner in a profile mounted on the bridge plate (1), the extension and the profile extending over the width of the portions (7) and also being in contact with each other over this width.

4. Bridge according to claim 3, characterised in that the extension (10) is in the form of a sector of a circular ring, which lies internally on a bead (21) of the profile (12), which bead is adapted to the inner radius of the circular ring and determines the pivotal axis.

5. Bridge according to claim 1, characterised in that the support is exclusively effected via the portions (7).

## Revendications

1. Niveleur de quai comportant un tablier (1) qui, à son extrémité (3) située du côté du quai, est monté basculant par rapport à un axe horizontal et qui est muni à son extrémité avant libre d'un prolongement (5) pouvant être sorti et rentré, destiné à s'appliquer à une plate-forme (8) à charger ou à décharger, le tablier (1) prenant appui, en la position de repos, sur une butée par l'intermédiaire du prolongement (5) rabattu vers le bas, le prolongement étant muni de part et d'autre d'une pièce (6) centrale d'un tronçon (7) pouvant être séparé de la pièce (6) centrale, mais pouvant également être rabattu, caractérisé en ce que, en la position de repos du niveleur, le tablier (1) prend appui par l'intermédiaire des tronçons (7) du prolongement (5) se trouvant dans la zone des bords latéraux du niveleur.

2. Niveleur suivant la revendication 1, caractérisé en ce que les tronçons (7) sont munis de parties (13) latéralement en saillie à l'extérieur à la façon d'oreilles et en ce que les butées (15) associées se trouvent du côté (16) frontal du quai (2).

3. Niveleur suivant la revendication 1, caractérisé en ce que, pour articuler les tronçons (7) au tablier, les tronçons sont munis d'un prolongement (10), qui rentre avec complémentarité de forme dans une pièce profilée montée sur le tablier (1), le prolongement et la pièce profilée s'étendant sur la largeur des tronçons et étant en contact l'un avec l'autre également sur cette largeur.

4. Niveleur suivant la revendication 3, caractérisé en ce que le prolongement (10) a la forme d'un secteur d'un anneau circulaire, qui repose intérieurement sur un renflement (21) de la pièce (12) profilée, qui est adapté au rayon intérieur de l'anneau circulaire et qui détermine l'axe de basculement.

5. Niveleur suivant la revendication 1, caractérisé en ce que le soutien s'effectue exclusivement par l'intermédiaire des tronçons (7).
